(19) Europäisches Patentamt
European Patent Office
Office européen des brevets

(11) EP 0 919 443 A2

(12) EUROPEAN PATENT APPLICATION

(43) Date of publication:
02.06.1999 Bulletin 1999/22

(51) Int Cl.⁶: B60S 1/08

(21) Application number: 98309667.8

(22) Date of filing: 25.11.1998

(84) Designated Contracting States:
AT BE CH CY DE DK ES FI FR GB GR IE IT LI LU MC NL PT SE
Designated Extension States:
AL LT LV MK RO SI

(30) Priority: 26.11.1997 JP 324036/97

(71) Applicant: NIPPON SHEET GLASS CO. LTD.
Chuo-ku Osaka-shi Osaka-fu (JP)

(72) Inventor: Shuhei, Tanaka,
Nippon sheet Glass Co., Ltd
Osaka-shi, Osaka (JP)

(74) Representative: Jackson, Robert Patrick
Frank B. Dehn & Co.,
European Patent Attorneys,
179 Queen Victoria Street
London EC4V 4EL (GB)

(54) Transparent substrate equipped with water detection sensor

(57)     A transparent substrate equipped with a water drop detection sensor for detecting one or more water drops W present upon a side surface of a transparent substrate 2 through the change in an amount of reflected detection light, wherein the water detection sensor comprises: a light emitting means 7 for emitting the detection light into the transparent substrate 2; a light receiving means 8 for detecting that portion of the emitted detection light which has undergone total internal reflection within the transparent substrate 2; and an adhesive material 6 having a refractive index that is nearly equal to that of the transparent substrate, for fixing the light emitting means 7 and/or the light receiving means 8 upon the other side surface of the transparent substrate 2.

FIG. 2

## Description

The present invention relates to a transparent substrate equipped with a water detection sensor for detecting the presence of water or other liquid upon a surface of a transparent substrate comprising a windshield or a door mirror of an automobile and so on, by using a light emitting element and a light receiving element.

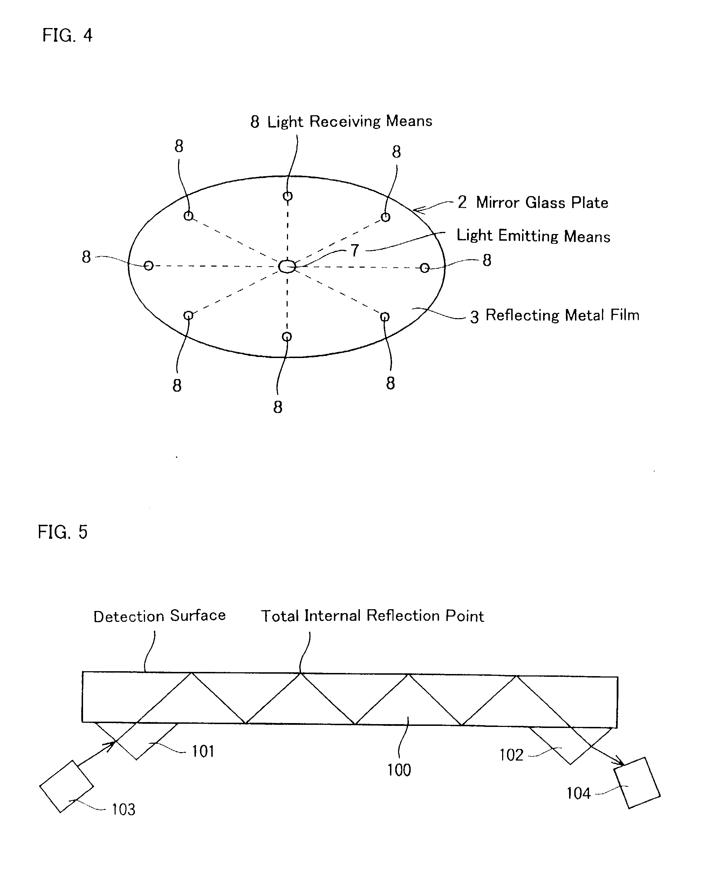

Conventionally, attempts have been made to detect the presence of liquids such as water drops upon a front windshield of an automobile, to thereby automatically activate a wiper or other mechanism. One known device having such a detection function is that which has the structure shown in Fig. 5.

In Fig. 5, prisms 101 and 102 are attached to the surface of a transparent substrate 100 comprising, for example, a glass plate, and light from a light source 103 is introduced into the transparent substrate 100 through the prism 101 at an angle at which total internal reflection occurs. If the incident angle is set in advance in such a manner that the light will not experience total internal reflection when there is a liquid, such as water, present upon the surface of the transparent substrate 100, then the amount of light reflected at each of the plural points of total internal reflection will change depending on whether or not any liquid is present upon the glass surface. Therefore, the existence of the liquid can be detected by detecting the amount of variation in the transmitting light by, for example, a light receiving element 104.

Also, Japanese Patent Laying-Open No. Sho 60-216245 (1985), teaches that the angle of the prism may be desirably set so that the light reflected from the water drop(s) is incident upon the light receiving element only when the water drop(s) are present upon the glass surface, since a sensitivity is poor if the light from the light source experiences total internal reflection upon the surface of the glass plate where no water is present, and the light is incident upon the light receiving element through the prism, as taught by the above-mentioned detection method.

Also, in Japanese Patent Laying-Open No. Sho 62-163949 (1987), it is disclosed that two (2) light sources are prepared, wherein an incident angle of the light beam from one of the light sources upon a detection surface is greater than a critical angle, while an incident angle of the light beam from the other light source upon the detection surface is less than that, thereby enabling the device to discriminate between the absence or presence of water.

Further, in Japanese Patent Laying-Open No. Hei 8-261974 (1996), there is disclosed a structure in which comb-like shaped transparent electrodes are positioned inside of a glass plate so as to detect a change in an electrostatic capacity between them, which is caused due to the presence of water drops upon the surface of the glass plate, thereby controlling the opening and closing of a window(s) and/or the starting and stopping of a heater depending thereupon.

Furthermore, in Japanese Patent Laying-Open (through PCT) No. Hei 6-509652 (1994), there is disclosed a structure in which sensing units comprising prisms are provided on an inner surface of a windshield at an intermediate layer having two (2) adhesive surfaces, thereby detecting water drops on an outside surface of the windshield and controlling the operation of wipers for the windshield depending upon the result of detecting the water drops.

In the transparent substrates equipped with an optical sensing function according to the conventional art, the prisms are an indispensable or essential element for introducing the light which will undergo total internal reflection into the glass, and the prisms must be closely attached onto the surface of the glass. Therefore, installing the device takes a great deal of labor and/or time. In particular, for the windshield glass used in an automobile which is curved in shape, it is difficult to closely attach the prisms onto the windshield glass.

Further, for avoiding unnecessary reflection on the boundary surface between the prism and the glass surface, there is a necessity to make them close to each other in refractive index (refractive index matching). For this reason, there can be conceived the provision of a matching layer, which, however, increases the number of manufacturing steps and brings other disadvantage in terms of cost.

Furthermore, other methods that work by detecting changes in electric resistance between electrodes, changes in electrostatic capacitance, and so on, are inferior in terms of durability and/or sensitivity to the optical methods mentioned above, in particular with respect to the front windshield glass of an automobile, where it is important that any signal that is detected to control a mechanism such as a wiper, etc., follow or conform to the visual sensitivity of the vehicle operator and fellow passengers. Therefore, a sensor using an optical method is preferable.

According to one aspect of the present invention, there is provided a transparent substrate equipped with a water detection sensor for detecting the presence of water or other liquids upon a side surface of the transparent substrate by detecting a change in an amount of reflected detection light, wherein the water drop detection sensor comprises:

light emitting means for emitting the detection light into the transparent substrate;

light receiving means for detecting that portion of the emitted detection light which has undergone total internal reflection within the transparent substrate; and

an adhesive material having a refractive index that is nearly equal to that of the transparent substrate, for fixing the light emitting means and/or the light receiving means upon the other side surface of the transparent substrate.

With this, not only are no prisms necessary and not only is the structure thereof simple, but also the presence of water on the transparent substrate can be detected by means of a detection area which comprises a continuous region of reflected points of detection light instead of by just the individual points of reflection themselves. Therefore the accuracy of the detection is improved compared to a case where water that is present upon the transparent substrate is be detected only by the reflection points.

Further, according to the present invention, there is preferably provided a transparent substrate equipped with a water detection sensor as defined above, wherein a shield portion is provided on the other side surface of the transparent substrate and opposite to the light emitting means for shielding the light which is emitted from the light emitting means at an incident angle less than a critical angle sufficient for causing the total internal reflection on a boundary surface between air and the transparent substrate.

With the provision of the shield portion on the other side surface of the transparent substrate opposing the light emitting means for shielding the light emitted from the light emitting means at an incident angle less than a critical angle sufficient for causing the total internal reflection on a boundary surface between air and the transparent substrate, it is thereby possible to prohibit any portion of the light that is emitted from the light emitting means in a disadvantageous direction from escaping to the outside.

Further, there is preferably provided a transparent substrate equipped with a water detection sensor as defined above, wherein a shield portion is provided on a side surface of the transparent substrate opposing the light receiving means, for shielding outside ambient light from entering through the transparent substrate directly into the light receiving means.

With the provision of the shield portion on the other side surface of the transparent substrate opposing the light receiving means, for shielding outside ambient light from entering from the outside through the transparent substrate directly into the light receiving means, the light receiving means is shielded from detecting undesirable outside ambient light, thereby enabling a stable operation of the water detection sensor.

Further, there is preferably provided a transparent substrate equipped with a water detection sensor as defined above, further including a light shielding material covering the adhesive material for fixing the water detection sensor.

With the provision of the light shielding material covering the adhesive material for fixing the water detection sensor, it is possible to protect the light emitting means from leaking or emitting light in unnecessary directions, and also to protect the light receiving means from any outside ambient light that might enter directly thereinto. Accordingly, any light escaping from the light emitting means does not enter into the light receiving means directly.

Further, there is preferably provided a transparent substrate equipped with a water detection sensor as defined above, wherein the light shielding material provides reflectivity at a contact surface between the adhesive material and light shielding material.

With this, since the light shielding material comprises the reflectivity at the contact surface between the adhesive material and the light shielding material, any light that exits to the rear (behind) of the light emitting means can be suitably reflected and can then propagate in the direction of the transparent substrate so as to be utilized as detection light, thereby achieving higher light efficiency.

Further, there is preferably provided a transparent substrate equipped with a water detection sensor as defined above, wherein the light shielding material comprises a concave mirror surface formed at a contact surface between the adhesive material and the light shielding material.

With this, since the light shielding material comprises the concave mirror surface formed at the contact surface between the adhesive material and the light shielding material, any light exiting to the rear (behind) of the light emitting means can be focused so as to propagate into the direction of the transparent substrate to be utilized as the detection light, thereby achieving a higher light efficiency.

Further, according to the present invention, there is preferably provided a transparent substrate equipped with a water detection sensor as defined above, wherein only one of the light emitting means is provided on the transparent substrate, while a plurality of light receiving means are provided around the light emitting means on the transparent substrate.

With this provision of only one light emitting means on the transparent substrate, while a plurality of light receiving means are provided around the light emitting means on the transparent substrate, the presence of water on the transparent substrate can be detected by means of a detection area which comprises a broad, continuous region of reflected points of detection light instead of by just the individual points of reflection themselves, thereby improving the device's detection accuracy compared to the case where water is detected using only the individual reflection points themselves.

Furthermore, according to a second aspect of the present invention, there is also provided a transparent substrate equipped with a water detection sensor for detecting presence of water or other liquids upon a side surface of the transparent substrate by detecting a change in an amount of reflected detection light, wherein the water detection sensor comprises:

light emitting means for emitting detection light;

light receiving means;

an optical fiber for guiding detection light emitted from the light emitting means so that it enters into the transparent substrate; and

another optical fiber for guiding that light which exits from the transparent substrate by undergoing total internal reflection within the transparent substrate into the light receiving means.

With this, by guiding the detection light through the optical fibers, it is possible to reduce the space necessary for installation of the water detection apparatus on the transparent substrate, and further to increase design flexibility. Moreover, this also makes it possible to install or position the light emitting means, the light receiving means, and various kinds of processing circuits and so on, under a wider variety of situations.

Preferred embodiments of the invention will now be described, by way of example only, and with reference to the accompanying drawings in which:

Fig. 1 shows a perspective view of a portion of an automobile to which a transparent substrate equipped with a water drop detection sensor according to the present invention is applied, specifically to a door mirror thereof;

Fig. 2 shows an explanatory view of the construction of a water drop detection sensor on the same door mirror;

Fig. 3 shows a construction of a light emitting means and a light receiving means;

Fig. 4 shows an explanatory view of the water detection sensor on the door mirror equipped with one light emitting means and a plurality of light receiving means; and

Fig. 5 is a construction view of a water detection sensor according to the conventional art.

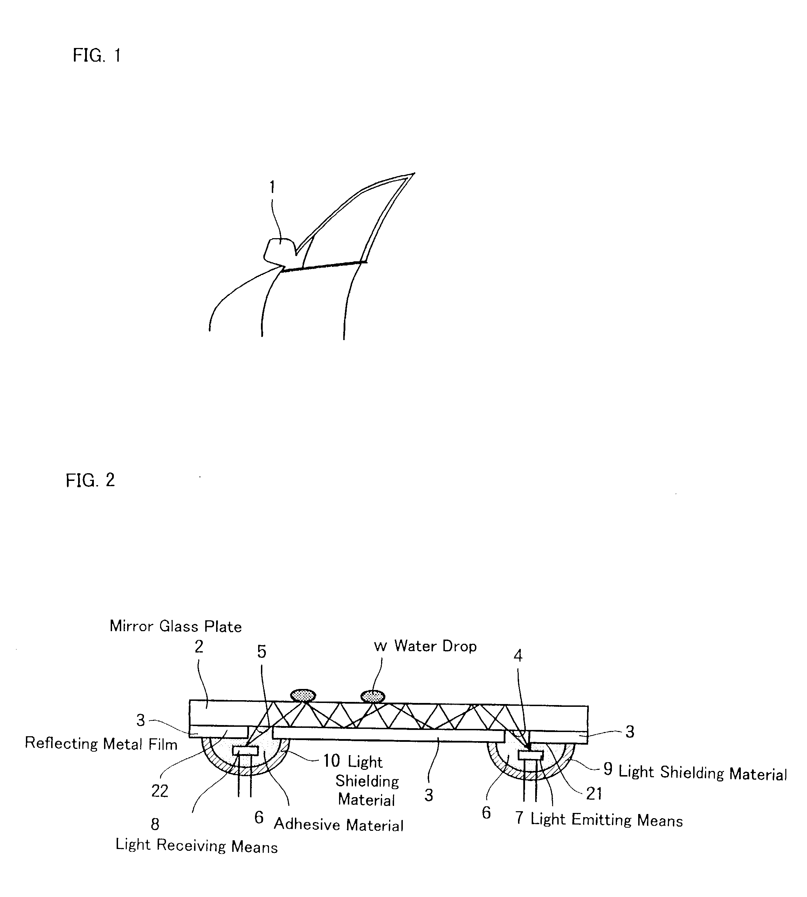

The transparent substrate equipped with a water detection sensor according to the present invention, as shown in Fig. 1, can be applied to a water drop detector apparatus for a door mirror 1.

In the water drop detector apparatus for the door mirror 1, as shown in Fig. 2, exposed portions 4 and 5, on which no reflecting metal film (shield portion) is provided , are formed upon an inside surface of a glass plate 2 used for the mirror 1 (hereinafter referred to as a mirror glass plate) at a predetermined location, a light emitting means 7 is fixed so as to be buried or contained within adhesive material 6 on the first exposed portion 4, and a light receiving means 8 is fixed so as to be buried or contained within adhesive material 6 on the second exposed portion 5.

As the adhesive material 6, epoxy adhesive or UV (ultraviolet) ray-curable epoxy adhesive, or the like is selected, which has a refractive index nearly equal to the refractive index (i.e., 1.48) of the mirror glass plate 2 for the mirror 1.

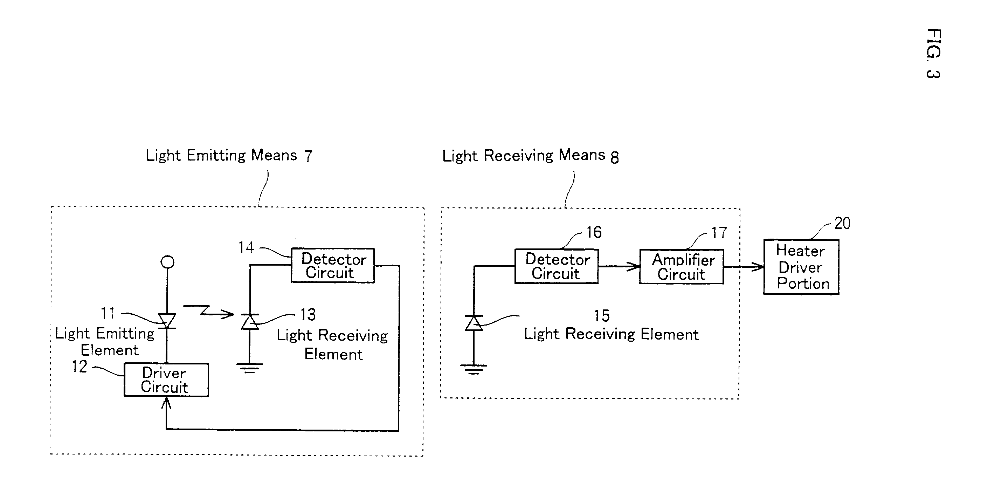

The light emitting means 7, as shown in Fig. 3, comprises a light emitting element 11, such as a light emitting diode (LED) or a laser diode (LD), a driver circuit 12 for driving the light emitting element 11 to output light which is modulated by a predetermined frequency therefrom, a light receiving element 13, such as a photo diode (PD) for monitoring the level of the output from the light emitting element 11, and a detector circuit 14 for outputting a signal corresponding to a modulation component from an output of the light receiving element 13 and feeding it back to the driver circuit 12. With the driver circuit 12, a driving current to be supplied to the light emitting element 11 is controlled so as to maintain the output of the detector circuit 14 at a desired output level.

The light receiving means 8, as is shown in Fig. 3, comprises a light receiving element 15, such as a PD, a detector circuit 16 for outputting a signal corresponding to the modulation component by the driver circuit 12 of the light emitting element 11 from an output signal of the light receiving element 15, and an amplifier circuit 17 for amplifying the signal output from the detector circuit 16. An output signal of the amplifier circuit 17 is inputted into a heater driver portion 20 of an antifogging heater for the door mirror so as to control ON/OFF switching of a heater thereof.

However, the light emitting means 7 may be constructed with only the light emitting element 11, or with the light emitting element 11 and a light receiving element 13 as a monitor thereof, while the driver circuit 12 and the detector circuit 14, etc., may be positioned in other place(s). Further, the light receiving means 8 may be constructed with only the light receiving element 15 while the detector circuit 16 and the amplifier circuit 17, etc., may be positioned in other places.

Further, among the light beams emitted from the light emitting means 7, as shown in Fig. 2, for preventing light other than that which has undergone total internal reflection at the boundary surface between the mirror glass plate 2 and air from affecting the accuracy of detection, and so that emitted light which has an incident angle equal or larger than a predetermined angle can function as the detection light, the position at which the light emitting means 7 is located is adjusted in such a manner that it is shifted from the center of the exposed portion 4 while the reflecting metal film (shield portion) 3 covers the light emitting portion of the light emitting means 7.

Accordingly, the reflecting metal film 3 covering the light emitting portion of the light emitting means 7 functions as a shielding portion 21, and therefore it is possible to prevent light whose incident angle is less than the predetermined angle (sufficient for causing the total internal reflection effect) from penetrating through the mirror glass plate 2 to the outside, whereby it would fail to contribute to the function of the detector.

Further, the position at which the light receiving means 8 is fixed is in a relation of symmetry with respect to that of the light emitting means 7, and therefore it is located so as to be shifted from the center of the exposed portion 5, in the same manner of the light emitting means 7, so that the reflecting metal film 3 covers the light receiving portion of the light receiving means 8.

Accordingly, only that light which has undergone total internal reflection upon the boundary surface between the mirror glass plate 2 and air so as to function as light for detection can pass through the exposed portion 5 to become incident upon the light receiving means 8. Further, the reflecting metal film 3 covering the light receiving portion of the light receiving means 8 functions as a shielding portion 22, and therefore no external ambient light from the outside can enter into the light receiving means 8 directly, which would interfere with the function of the detector.

However, the position at which the light emitting means 7 is located may be arbitrarily selected to agree with a minimum incident angle at which the light exiting at the central portion of the light emitting means 7 undergoes the total internal reflection upon the boundary surface between the mirror glass plate 2 and air. In this case, any light which exits in such a direction that it does not undergo total internal reflection upon the boundary surface between the mirror glass plate 2 and air, as is mentioned above, can be interrupted or blocked by the reflecting metal film 3 by suitably shifting the position at which the light emitting means 7 is fixed with respect the center of the exposed portion 4.

Also, in a case where the present invention is applied to a front windshield of an automobile, for example, in which there is no reflecting metal film like that of the mirror glass 2, a shielding portion, which can take the place of the reflecting metal film 3 functioning as the shielding portions 21 and 22 in Fig. 2, may be provided on the inner side surfaces of the front glass, opposite to the light emitting portion of the light emitting means 7 and the receiving portion of the light receiving means 8.

In this manner, with provision of the shielding portion 21, it is possible to prevent any light, which exits from the light emitting means 7 at an incident angle less than a critical angle required for the total internal reflection upon the boundary surface between air and the mirror glass plate 2, from escaping outside.

Further, with the provision of the shielding portion 22, it is possible to interrupt or block any outside ambient light which penetrates through the mirror glass plate 2 from the outside from entering directly into the light receiving means 8.

Accordingly, it is possible to operate the water drop detector apparatus for the door mirror 1 with stability and accuracy.

Furthermore, if a surface of the shield portion 21 opposite to the light emitting means 7 is reflective (has reflectivity), even the light exiting from the light emitting means 7 at an incident angle less than the critical angle can be utilized as light for detection by making it propagate within the mirror glass plate 2 by reflecting it upon the shield portion 21 and the light shielding material 9.

Further, there are provided convex light shielding materials 9 and 10, which cover the adhesive materials 6 which are provided for fixing the light emitting means 7 and the light receiving means 8 onto the exposed portions 4 and 5, respectively.

The light shielding materials 9 and 10 comprise resin for optically shielding the adhesive material 6. The light shielding material 9 fills the role of preventing the light emitted from the light emitting means 7 from escaping, while the other light shielding material 10 fills the role of preventing the outside ambient light and so on from entering into the light receiving means 8 directly.

Accordingly, any light escaping from the light emitting means 7 does not enter into the light receiving means 8 directly.

Further, it is preferable that contact surfaces of the light shielding materials 9 and 10 with the adhesive material 6, i.e., the surfaces of the light shielding materials 9 and 10 opposite to the light emitting means 7 and the light receiving means 8, have good reflectivity.

Further, it is also preferable that the contact surfaces of the light shielding materials 9 and 10 with the adhesive material 6, i.e., the surfaces of the light shielding materials 9 and 10 opposite to the light emitting means 7 and the light receiving means 8, be made by forming concave mirror surfaces.

In this manner, by allowing the contact surfaces of the light shielding materials 9 and 10 with the adhesive material 6 to have good reflectivity or by forming the concave mirror surfaces on the contact surfaces, it is possible to utilize any light emitting backwards as detection light by collecting or focussing it so that it too propagates in the direction of the mirror glass plate 2. Moreover, it is also possible to reflect any detection light which transmits through the opening 5 but fails to enter into the light receiving means 8 directly so that it does enter into the light receiving means 8, thereby contributing to the detection and obtaining effective utilization of the light.

The function or operation of the water drop detection apparatus for the door mirror 1 constructed in the manner mentioned above will now be explained.

The light emitted from the light emitting means 7 is radiated in all directions in the case of employing an LED, while it is radiated almost entirely in one direction in the case of employing an LD. The light enters into the mirror glass plate 2 through the adhesive material 6. As was explained above, the adhesive material 6 comprises resin having a refractive index nearly equal to that of the mirror glass plate 2, and therefore the light emitted from the light emitting means 7 travels straightforward without refraction upon the boundary surface between the adhesive material 6 and the mirror glass plate 2.

Here, the light that would otherwise enter inside the mirror glass plate 2 at an incident angle less than the critical angle, as is shown in Fig. 2, does not travel outside of the mirror glass plate 2 due to the shielding portion. Further, the light entering at an incident angle equal or greater than the critical angle does propagate within the mirror glass plate 2 undergoing total internal reflection, in alternative legs, upon the boundary surface between the mirror glass plate 2 and the air, and upon the boundary surface between the mirror glass plate 2 and the reflecting metal film 3. Then, it is eventually incident upon the light receiving means 8.

For obtaining an incident angle required for initiating the total internal reflection at the boundary surface between air and glass, i.e., the critical angle, the following calculation can be conducted using Snell's law. A general equation of Snell's law is shown below in equation (1):

$$n_0 \cdot \sin \alpha_0 = n \cdot \sin \alpha \qquad (1)$$

where $\alpha$ and $\alpha_0$ are angles with respect to normal lines at the boundary between surfaces of materials having refractive indexes $n$ and $n_0$ ( $\alpha_0$: incident angle, $\alpha$: refraction angle).

Assuming that the refractive index of the glass is $n=1.48$ and the refractive index of air is $n_0=1$, then the condition to obtain total internal reflection inside the glass plate can be obtained, and $\alpha=42.5°$ from equation (1) since $\alpha_0=90°$.

Accordingly, total internal reflection occurs within the medium of the glass if the incident angle $\alpha$ is equal or greater than the angle 42.5°.

Further, in a case where water is present or adhered on the glass, $\alpha=64.0°$ is obtained from a similar calculation for obtaining total internal reflection within the glass, by assuming that the refractive index of water is $n_0=1.33$.

Accordingly, within the region of incident angles $\alpha$ from 42.5° up to 64.0° ($42.5° \leqq \alpha \leqq 64.0°$), total internal reflection occurs within the glass if no water is present on the glass, while it does not occur within the glass if water is present thereon.

For causing this reflection, the incident angle of the light emitted from the light emitting means 7 is set up so as to fulfill the condition on the angle of incidence $\alpha$ ($42.5° \leqq \alpha \leqq 64.0°$), by adjusting the position at which the light emitting means 7 is fixed. Also, the incident angle at which the reflected light enters into the light receiving means 8 is in symmetry with that of the light emitting means 7, and therefore the position at which the light receiving means 8 is fixed is also adjusted so as to receive the reflected light without loss thereof.

Accordingly, in a case where one or more water drops W are present upon the surface of the mirror glass plate 2 on the path of propagation, the light will escape outside of the mirror glass plate 2 through the water drops W, and thereby the amount of light arriving at the light receiving means 8 will be decreased. By detecting the decreased amount of light and applying a suitable calculation based thereon, the degree of adhesion (presence or not) of the water drops W can be determined.

According to the present invention, all of the light in the region satisfying the condition of the incident angle $\alpha$ ($42.5° \leqq \alpha \leqq 64.0°$) is utilized. In other words, the water drops W are detected over an area of the glass substrate (windshield or mirror), and therefore the accuracy of detection is improved.

The water drop detector apparatus for the door mirror 1 inputs the output signal of the amplifier circuit 17 corresponding to the amount of water drops W present on or adhering to the glass into the heater driver portion 20.

Then, the heater driver portion 20 turns a built-in heater of the antifogging mirror ON when the detected amount of water drops W is equal to or greater than a preset value, while it is turned OFF when the detected amount of water drops W is less than the preset value. Note that this is not a limiting factor, and the present invention may be used to control any other system whose operation depends on the amount of water present on the glass surface.

Further, as shown in Fig. 4, it is possible to provide only one light emitting means 7 at the center of the mirror glass plate 2, while simultaneously providing a plurality (eight in the embodiment shown in Fig. 2) of light receiving means 8 on the mirror glass plate 2 around the light emitting means 7, thereby efficiently detecting the water drops W present on the mirror glass plate 2.

With this construction, the water drops W present upon the surface of the mirror glass plate 2 can be detected by means of a detection area which comprises a broad, continuous region of reflected points of detection light instead of by just the individual areas of reflection themselves. Therefore, it is possible to remarkably improve the detecting accuracy compared to the case where only the water drops W present over individual reflection points are detected.

Further, between the light emitting means 7 and the mirror glass plate 2 or the transparent substrate such as the windshield for an automobile and so on, and also between the transparent substrate and the light receiving means 8, there can be provided one or more (plural) optical fibers.

Namely, the detection light can be guided into the transparent substrate by means of the optical fibers so that the total internal reflection occurs within the transparent substrate, and at the same time, the portion of the light from the detection light which has undergone the total internal reflection within the transparent substrate arid that has exited therefrom is guided to the light receiving means 8 through optical fibers.

With this construction, it is not necessary to fix the light emitting means 7 and the light receiving means 8 directly onto the transparent substrate, and therefore the detection light can be guided from the light emitting means 7 to the transparent substrate or from the transparent substrate to the light receiving means 8 while allowing an even greater degree of flexibility in design.

However, the position at which the optical fibers are connected to the transparent substrate may be either the side surface of the transparent substrate or the end surface thereof, and therefore it is sufficient that the optical fibers be fixed so that the detection light exiting from the light emitting means 7 propagates in the transparent substrate while undergoing the total internal reflection therein, and is guided into the light receiving means 8.

Accordingly, by guiding the detection light by means of the optical fibers, it is not necessity to connect or fix the light emitting means 7 and the light receiving means 8 directly onto the mirror glass plate 2 or the windshield of the automobile, thereby enabling the space required for the water drop detector apparatus to be reduced.

Further, freedom in the ways of guiding the detection light into the transparent substrate is increased.

Moreover, it is also possible to provide various kinds of processing circuits, such as the light emitting means 7 and the light receiving means 8, at a suitable position under a preferable environmental or other advantageous situation.

According to the embodiments of the present invention, the explanation was only given of the case where the present invention is applied to the water drop detector apparatus of the door mirror 1. However, it also can be applied to other examples, such as the controlling of a wiper driver by detecting water drops present on an automobile windshield and so on.

Furthermore, it can be applied to the ON-OFF control of an antifogging heater, which detects mist on a toilet mirror.

Moreover, the object of detection sensed by the transparent substrate equipped with the water drop detection sensor according to the present invention should not be limited only to water drops. This can include also any liquid or other matter which is present on or attaches or adheres to the transparent substrate, such as a liquid, dust and so on, the refractive indexes of which are already known. Further, the transparent substrate should not also be limited only to a door mirror or the windshield of an automobile, or a toilet mirror and so on, and it can also include anything through which light can penetrate or pass.

**Claims**

1. A transparent substrate (2) equipped with a water drop detection sensor for detecting presence of water or other liquid upon a side surface of said transparent substrate through change in an amount of reflected detection light, wherein said water detection sensor comprises:

    light emitting means (7) for entering the detection light into said transparent substrate;
    light receiving means (8) for detecting that portion of the emitted detection light which has undergone total internal reflection within said transparent substrate; and
    adhesive material (6) having a refractive index that is nearly equal to that of said transparent substrate, for fixing said light emitting means and/or said light receiving means upon the other side surface of said transparent substrate.

2. A transparent substrate (2) equipped with a water detection sensor, as defined in claim 1, wherein a shield portion (3) is provided on a side surface of said transparent substrate and opposite to said light emitting means (7) for shielding light exiting from said light emitting means at an incident angle less than a critical angle for causing the total internal reflection on a boundary surface between air and said transparent substrate.

3. A transparent substrate (2) equipped with a water detection sensor, as defined in claim 1 or 2, wherein a shield portion (3) is provided on a side surface of said transparent substrate and opposite to said light receiving means (8), for shielding outside ambient light from entering from outside through said transparent substrate directly into said light receiving means.

4. A transparent substrate (2) equipped with a water detection sensor as claimed in claim 2 or 3 wherein said shield portion (3) is provided on the same side of said transparent substrate as said light emitting (7) and/or said light receiving (8) means.

5. A transparent substrate (2) equipped with a water detection sensor, as defined in claim 1, 2, 3 or 4, further including a light shielding material (10) covering said adhesive material (6) for fixing said light receiving (8) and/or said light emitting (7) means.

6. A transparent substrate (2) equipped with a water detection sensor, as defined in claim 5, wherein said light shielding material (10) comprises high reflectivity formed at a contact surface between said adhesive material (6) and said light shielding material.

7. A transparent substrate (2) equipped with a water detection sensor, as defined in claim 5, wherein said light shielding material (10) comprises a concave mirror surface formed at a contact surface between said adhesive material (6) and said light shielding material.

8. A transparent substrate (2) equipped with a water detection sensor, as defined in any preceding claim, wherein only one light emitting means (7) is provided on said transparent substrate, while a plurality of said light receiving means (8) are provided around said light emitting means on said transparent substrate.

9. A transparent substrate (2) equipped with a water detection sensor for detecting presence of water or other liquids upon a side surface of said transparent substrate through change in an amount of reflected detection light, wherein said water detection sensor comprises:

   light emitting means (7) for emitting detection light;
   light receiving means (8) ;
   a plurality of optical fibers for guiding the detection light from said light emitting means so that it enters into said transparent substrate; and
   a plurality of optical fibers for guiding that light which exits from the transparent substrate by undergoing total internal reflection within the transparent substrate into the light receiving means.

FIG. 1

FIG. 2

Mirror Glass Plate

w Water Drop

2    5                          4

3                                3

Reflecting Metal Film

22                              21

10 Light
Shielding
Material          3

9 Light Shielding Material

8              6 Adhesive Material      6   7 Light Emitting Means

Light Receiving Means

FIG. 3

Light Emitting Means 7

Light Receiving Means 8

Heater Driver Portion 20

Amplifier Circuit 17

Detector Circuit 16

Light Receiving Element 15

Detector Circuit 14

Light Receiving Element 13

Light Emitting Element 11

Driver Circuit 12

FIG. 4

8 Light Receiving Means

8

8

2 Mirror Glass Plate

Light Emitting Means

7

8

8

3 Reflecting Metal Film

8

8

8

FIG. 5

Detection Surface   Total Internal Reflection Point

101

100

102

103

104